# EUROPÄISCHE PATENTSCHRIFT

(11) **EP 1 609 736 B1**
(45) Veröffentlichungstag und Bekanntmachung des Hinweises auf die Patenterteilung: **23.07.2008**
(21) Anmeldenummer: 05105118.3
(22) Anmeldetag: 10.06.2005
(51) Int. Cl.: B65D 73/00, B65D 75/32

(54) **Schauverpackung für Fahrradgriffe**
Display package for bicycle handle-bar grip
Emballage-présentoir pour poignée de bicyclette

(30) Priorität: 24.06.2004 DE 202004009963 U
(43) Veröffentlichungstag der Anmeldung: 28.12.2005
(73) Patentinhaber: RTI Sports Vertrieb von Sportartikeln GmbH, 56220 Urmitz (DE)
(72) Erfinder: Arnold, Franc, 56068 Koblenz (DE)
(74) Vertreter: von Kirschbaum, Alexander

(56) Entgegenhaltungen:
- EP-A- 0 964 402
- EP-A- 1 388 501
- US-B1- 6 450 335
- ANONYMOUS: "CD- Spindel Hamburg vs. Berlin" INTERNET ARTICLE, [Online] XP002435683 Gefunden im Internet: URL:http://www.pop64.de/blog/2007/04/05/cd -spindel-hamburg-vs-berlin/> [gefunden am 2007-05-31]

## Beschreibung

Die Erfindung betrifft ein Display für Fahrradgriffe.

Mit Displays werden Produkte, wie beispielsweise Fahrradgriffe, in Verkaufsräumen präsentiert. Üblicherweise weisen Displays ein beispielsweise aus einem dicken Karton oder dgl. bestehendes Displayelement auf, mit dem die Produkte verbunden sind. Hierbei können die Produkte beispielsweise in einem durchsichtigen Verpackungskörper angeordnet sein, der insbesondere durch Kleben mit dem Displayelement verbunden ist. Durch das Display soll die Ware verkaufsfördernd präsentiert werden.

EP 0 964 402 A2 beschreibt eine Verpackung zum Verkaufen oder Präsentieren von CDs, wobei die CDs mit ihrer Ausnehmung auf ein stabförmiges Halteelement gesteckt werden. Die Verpackung weist eine runde Grundfläche sowie eine kegelstumpfförmige, durchsichtige Abdeckung an der Oberseite auf.

Aufgabe der Erfindung ist es, ein Display für Fahrradgriffe zu schaffen, mit dem die Fahrradgriffe für den Kunden ansprechend präsentiert werden.

Die Lösung der Aufgabe erfolgt erfindungsgemäß durch die Merkmale des Anspruchs 1.

Das erfindungsgemäße Display für Fahrradgriffe weist ein Basiselement auf, mit dem ein stabförmiges Aufnahmeelement verbunden ist. Auf das stabförmige Aufnahmeelement ist erfindungsgemäß ein Fahrradgriff aufsteckbar, so dass das stabförmige Aufnahmeelement im Wesentlichen einem Lenkerende ähnelt. Erfindungsgemäß ist es hierdurch möglich, den auf das Aufnahmeelement aufgesteckten Fahrradgriff anzugreifen. Somit ist es für den Kunden möglich, zu testen, wie sich der Griff anfühlt und wie der Griff, beispielsweise auf Grund seiner ergonomischen Formgebung, in der Hand liegt.

Das erfindungsgemäße Display für Fahrradgriffe hat somit den Vorteil, dass ein Kunde das Produkt nicht nur betrachten, sondern auch ausprobieren kann. Dies ist insbesondere bei ergonomisch ausgestalteten Fahrradgriffen mit beispielsweise speziellen Griffoberflächen und Griffformen beim Kauf von entscheidender Bedeutung. Durch das erfindungsgemäße Display ist es nicht mehr erforderlich, dass im Gegensatz zu herkömmlichen Displays, in denen die Fahrradgriffe angeordnet sind, ein einzelner Fahrradgriff dem Kunden zum testen dargeboten wird. Dies ist insbesondere bei einer Vielzahl unterschiedlicher Fahrradgriffe vorteilhaft, da der Kunde beim Verwenden des erfindungsgemäßen Displays auf einfache Weise unterschiedliche Fahrradgriffe testen kann.

Das Aufnahmeelement für den Fahrradgriff ist vorzugsweise lösbar mit dem Basiselement verbunden. Dies kann beispielsweise durch eine Rast-, eine Klemm- oder eine Schraubverbindung erfolgen. Ferner kann das Aufnahmeelement an dem dem Basiselement abgewandten Ende eine Abziehsicherung aufweisen. Durch die Abziehsicherung ist sichergestellt, dass der Fahrradgriff nicht von einem Kunden in dem Laden ohne größeren Aufwand von dem stabförmigen Aufnahmeelement abgezogen und entwendet werden kann. Das Abziehelement kann als kopfförmiger Ansatz ausgebildet sein. Insbesondere ist das Abziehelement als kreisrunde Scheibe ausgebildet, die einen größeren Durchmesser als das stabförmige, insbesondere zylindrische Aufnahmeelement aufweist. Dies hat zur Folge, dass der Fahrradgriff von der dem Basiselement zugewandten Seite des Aufnahmeelementes auf dieses aufgesteckt werden muss und nach dem Aufstecken des Fahrradgriffs auf das Aufnahmeelement dieses mit dem Basiselement verbunden wird.

Bei einer besonders bevorzugten Ausführungsform ist das Basiselement ferner mit einem Displayelement, das zur Informationsdarstellung dient, verbunden. Auf dem Displayelement kann insbesondere der Name des Produkts, Produktinformationen, Preisangaben etc. vorzugsweise aufgedruckt sein. Beispielsweise handelt es sich bei dem Displayelement um ein ebenes Element aus einem dickeren Karton oder Kunststoff von beispielsweise 2 - 3 mm.

Um das Testen des Fahrradgriffes durch Greifen auf gute Weise ermöglichen zu können, weist das Displayelement eine in Richtung des Aufnahmeelementes weisende Greiföffnung auf. Die Greiföffnung weist vorzugsweise im Wesentlichen die Breite des Griffes auf. Die Greiföffnung ist in Richtung des Aufnahmeelementes bzw. bei montiertem Fahrradgriff in Richtung des Fahrradgriffs offen. Die Greiföffnung weist vorzugsweise die Form einer halben Ellipse oder eines halben Ovals auf.

Mit dem Displayelement oder dem Basiselement ist ferner ein Aufhängeelement, beispielsweise eine Aufhängeöffnung, verbunden. Mit Hilfe des Aufhängeelementes kann das Display an einem Displayständer einer Verkaufstafel, die beispielsweise einen entsprechenden Haken aufweist, und dgl. angeordnet werden.

Das Basiselement, das ebenfalls stabförmig ausgebildet sein kann, weist einen sich vorzugsweise in Längsrichtung erstreckenden Hohlraum zur Aufnahme einer Montageanleitung, einer Garantie etc. auf. Die Öffnung ist vorzugsweise mit einem Deckel verschlossen.

Da es ausreichend ist, dass ein Fahrradgriff vom Kunden getestet werden kann, ist der zweite Fahrradgriff vorzugsweise in einem Verpackungskörper angeordnet, der mit dem Displayelement verbunden ist. Hierbei kann es sich bei dem Verpackungskörper um einen durchsichtigen Kunststoffkörper handeln, der vorzugsweise durch Aufkleben mit einer Oberfläche des Displayelementes verbunden ist.

Nachfolgend wird die Erfindung an Hand einer bevorzugten Ausführungsform unter Bezugnahme auf die anliegenden Zeichnungen näher erläutert.

Es zeigen:
- Fig. 1: eine Draufsicht des erfindungsgemäßen Displays ohne Fahrradgriffe,
- Fig. 2: eine schematische Schnittansicht entlang der Linie II-II in Fig. 1 und
- Fig. 3: eine schematische Draufsicht des Displays mit Fahrradgriffen.

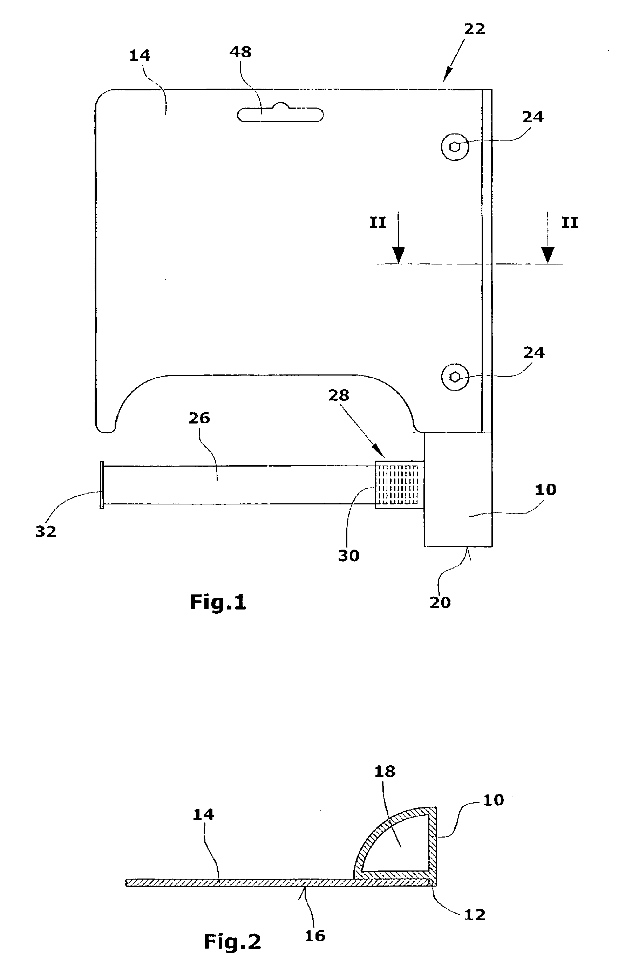

Das Display weist ein stabförmiges, beispielsweise aus Kunststoff bestehendes Basiselement 10 auf. Das Basiselement 10 weist im Wesentlichen über die gesamte Länge den in Fig. 2 dargestellten Querschnitt auf, der im Wesentlichen einem Viertelkreis entspricht. Das Basiselement 10 weist einen Anschlag 12 auf. Dieser dient zur Lagefixierung eines Displayelementes 14. Der Anschlag 12 weist vorzugsweise eine Dicke auf, die der Dicke des Displayelementes 14 entspricht, so dass eine Oberfläche 16 des Displays mit der Oberseite des Anschlags 12 abschließt.

Das Basiselement 10 weist ferner einen sich in Längsrichtung erstreckenden Hohlraum 18 auf, der an einer Unterseite 20 sowie an einer Oberseite 22 verschlossen ist. Hierbei kann eines der beiden Verschlusselemente als Deckel ausgebildet sein, so dass das Basiselement geöffnet werden kann. Dies dient dazu, dass in dem Hohlraum 18 beispielsweise eine Montageanleitung und/oder eine Garantie und dgl. angeordnet werden kann.

Mit dem Basiselement 10 ist über Befestigungselemente, wie Schrauben 24, das Displayelement 14 fest verbunden. Bei dem Displayelement 14 handelt es sich vorzugsweise um ein ebenes aus beispielsweise 2 - 4 mm starkem Karton bestehendes Element. Auf der Oberfläche 16 des Displayelements 14 bzw. ggf. auch auf der gegenüberliegenden Rückseite, können Informationen dargestellt, insbesondere aufgedruckt werden.

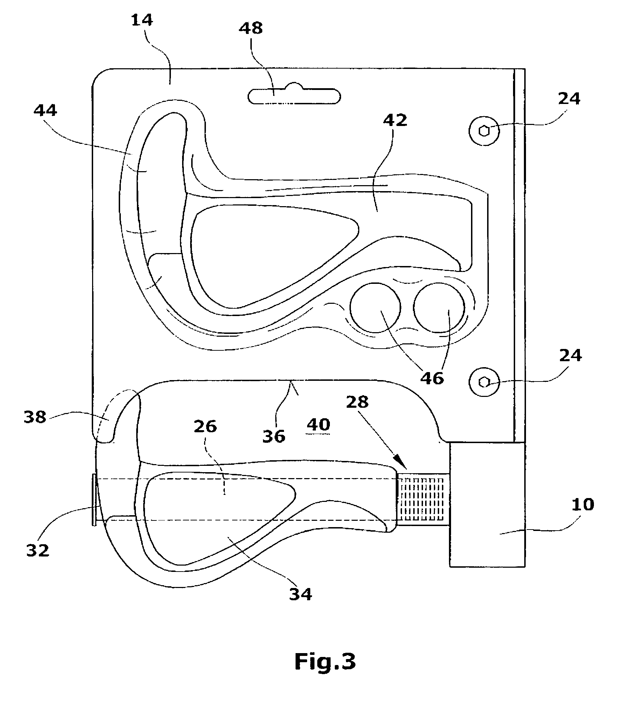

Unterhalb des Displayelementes ist ein Aufnahmeelement 26 angeordnet. Das Aufnahmeelement 26 ist stabförmig, insbesondere zylindrisch ausgebildet. Im dargestellten Ausführungsbeispiel ist das Aufnahmeelement 26 über eine Schraubverbindung 28 mit einem ebenfalls zylindrischen Ansatzstück 30 des Basiselementes verbunden. An dem dem Basiselement abgewandten Ende des Aufnahmeelementes 26 ist eine Abziehsicherung 32 vorgesehen. Bei der Abziehsicherung 32 kann es sich um eine kreisrunde Scheibe mit einem größeren Durchmesser als das zylindrische Aufnahmeelement 26 handeln, Durch die Abziehsicherung ist es vermieden, dass der Fahrradgriff 34 (Fig. 3) bereits in den Verkaufsräumen von dem Aufnahmeelement 26 heruntergezogen und entwendet werden kann.

Das Displayelement 14 weist in Richtung der zum Fahrradgriff 34 weisenden Seite eine Greiföffnung 36 auf, so dass der Fahrradgriff 34 auf einfache Weise von einem Kunden getestet bzw. in die Hand genommen werden kann. Hierbei ist die Greiföffnung 36 derart ausgebildet, dass sie entsprechend einer halben Ellipse oder eines halben Ovals geformt ist und sich somit ein Ansatz 38 bildet. Hierdurch entsteht eine Öffnung 40, die den Kunden zum Anfassen des Fahrradgriffs 34 animiert.

Ein zweiter Fahrradgriff 42 ist in einem vorzugsweise durchsichtigen Verpackungskörper 44 angeordnet. Der insbesondere aus einem dünnen Kunststoff bestehende Verpackungskörper 44 umgibt den Fahrradgriff 42 sowie Verschlusselemente 46 zum Verschließen der Lenkerenden bei montierten Fahrradgriffen. Der Verpackungskörper ist in Richtung des Displayelementes 14 offen und mit diesem beispielsweise durch eine Klebeverbindung verbunden.

Ferner weist das Displayelement 14 ein Aufhängelement 48 in Form einer Öffnung auf. Hierdurch eis es möglich, das Display an einem Haken eines Displayständers oder einer Verkaufstafel zur Präsentation in einem Laden aufzuhängen.

## Patentansprüche

1. Display für Fahrradgriffe mit,
einem Basiselement (10) und
einem mit dem Basiselement (10) verbundenen stabförmigen Aufnahmeelement (26), auf das der Fahrradgriff (34) aufsteckbar ist, wobei mit dem Basiselement (10) ein Displayelement (14) zur Informationsdarstellung verbunden ist,
**dadurch gekennzeichnet, dass**
das Displayelement (14) eine in Richtung des Aufnahmeelements (26) weisende Greiföffnung (36) aufweist.

2. Display für Fahrradgriffe nach Anspruch 1, **dadurch gekennzeichnet, dass** das Aufnahmeelement (26) lösbar mit dem Basiselement (10) verbunden ist.

3. Display für Fahrradgriffe nach Anspruch 1 oder 2, **dadurch gekennzeichnet, dass** das Aufnahmeelement (26) an dem dem Basiselement abgewandten Ende eine Abziehsicherung (32) aufweist.

4. Display für Fahrradgriffe nach Anspruch 3, **dadurch gekennzeichnet, dass** das Displayelement (14) oberhalb des Aufnahmeelementes (26) angeordnet ist.

5. Display für Fahrradgriffe nach einem der Ansprühe 1-4, **dadurch gekennzeichnet, dass** das Basiselement (10) oder das Displayelement (14) ein Aufhängeelement (48) zur Aufnahme an einem Displayständer oder einer Verkaufstafel aufweist.

6. Display für Fahrradgriffe nach einem der Ansprühe 1 - 5, **dadurch gekennzeichnet, dass** das Basiselement (10) einen Hohlraum (18) zur Aufnahme einer Montageanleitung aufweist.

7. Display für Fahrradgriffe nach einem der Ansprühe 4-6, **dadurch gekennzeichnet, dass** ein zweiter Fahrradgriff (42) in einem Verpackungskörper (44) angeordnete werden kann, der mit dem Displayelement (14) verbunden ist.

## Claims

1. A display for bicycle handlebar grips, comprising
a base element (10) and
a rod-shaped receiving element (26) onto which the bicycle handlebar grip (34) can be slipped and which is connected with the base element (10), the base element (10) being connected with a display element (44) for the presentation of information,
**characterized in that**
the display element (14) has a gripping opening (36) pointing towards the receiving element (26).

2. The display for bicycle handlebar grips according to claim 1, **characterized in that** the receiving element (26) is releasably connected with the base element (10).

3. The display for bicycle handlebar grips according to claim 1 or 2, **characterized in that** the receiving element (26) comprises a stripping protection (32) at the end facing away from the base element.

4. The display for bicycle handlebar grips according to claim 3, **characterized in that** the display element (14) is arranged above the receiving element (26).

5. The display for bicycle handlebar grips according to one of claims 1-4, **characterized in that** the base element (10) or the display element (14) comprises a suspending element (48) for reception at a display stand or a sales board.

6. The display for bicycle handlebar grips according to one of claims 1-5, **characterized in that** the base element (10) has a hollow space (18) for receiving assembly instructions.

7. The display for bicycle handlebar grips according to one of claims 4-6, **characterized in that** a second bicycle handlebar grip (42) can be arranged in a packaging body (44) connected with the display element (14).

## Revendications

1. Présentoir pour poignée de bicyclette comprenant
un élément de base (10) et
un élément de réception (26) en forme de bâton, relié à l'élément de base (10), sur lequel élément de réception peut être enfilé la poignée de bicyclette (34), l'élément de base (10) étant relié à un élément présentoir (14) pour la présentation d'informations,
**caractérisé en ce que**
l'élément présentoir (14) comprend une orifice de prise (36) tournée vers l'élément de réception (26).

2. Présentoir pour poignée de bicyclette selon la revendication 1, **caractérisé en ce que** l'élément de réception (26) est relié à l'élément de base (10) d'une manière amovible.

3. Présentoir pour poignée de bicyclette selon la revendication 1 ou 2, **caractérisé en ce que** l'élément de réception (26) comprend un moyen de protection contre l'enlèvement (32) à l'extrémité opposée à l'élément de réception (26).

4. Présentoir pour poignée de bicyclette selon la revendication 3, **caractérisé en ce que** l'élément présentoir (14) est situé au-dessus de l'élément de réception (26).

5. Présentoir pour poignée de bicyclette selon une des revendications 1 - 4, **caractérisé en ce que** l'élément de base (10) ou l'élément présentoir (14) comprend un élément d'accrochage (48) pour l'attacher sur un support présentoir ou un tableau de vente.

6. Présentoir pour poignée de bicyclette selon une des revendications 1 - 5, **caractérisé en ce que** l'élément de base (10) comprend un creux (18) pour recevoir une notice de montage.

7. Présentoir pour poignée de bicyclette selon une des revendications 4 - 6, **caractérisé en ce qu'**une deuxième poignée de bicyclette (42) peut être disposée dans un corps d'emballage (44) relié à l'élément présentoir (14).
